# EUROPÄISCHE PATENTSCHRIFT

(11) **EP 0 907 495 B1**
(45) Veröffentlichungstag und Bekanntmachung des Hinweises auf die Patenterteilung: **19.07.2000**
(21) Anmeldenummer: 97924976.0
(22) Anmeldetag: 22.05.1997
(51) Int. Cl.: B29C 55/06

(54) **ZUMINDEST ZWEISTUFIGES VERFAHREN ZUR LÄNGSRECKUNG VON KUNSTSTOFFOLIEN SOWIE ZUGEHÖRIGE VORRICHTUNG**
PROCESS WITH AT LEAST TWO STAGES FOR LENGTHWISE STRETCHING PLASTIC FILM AND EQUIPMENT FOR CARRYING OUT THE PROCESS
PROCEDE A AU MOINS DEUX ETAPES POUR L'ETIRAGE LONGITUDINAL D'UN FILM DE PLASTIQUE ET DISPOSITIF ASSOCIE

(30) Priorität: 31.05.1996 DE 19622085
(43) Veröffentlichungstag der Anmeldung: 14.04.1999
(73) Patentinhaber: Brückner Maschinenbau GmbH, 83313 Siegsdorf (DE)
(72) Erfinder: WELLENHOFER, Peter, D-83224 Grassau (DE); STOPPERKA, Klaus, D-06849 Dessau (DE); SCHWUCHOW, Rainer, D-83355 Grabenstätt (DE)
(74) Vertreter: Flach, Dieter Dipl.-Phys.
(86) Internationale Anmeldenummer: EP9702630
(87) Internationale Veröffentlichungsnummer: WO9746368

(56) Entgegenhaltungen:
- EP-A- 0 030 648
- EP-A- 0 049 108
- EP-A- 0 470 633
- DE-A- 1 778 432
- GB-A- 1 407 580
- US-A- 3 619 460
- US-A- 3 801 404
- US-A- 4 954 306

## Beschreibung

Die Erfindung betrifft ein Verfahren zur Längsreckung von Kunststoffolien, insbesondere ein zumindest zweistufiges Verfahren zur Längsreckung von Polypropylen umfassenden Folien sowie eine zugehörige Vorrichtung nach dem Oberbegriff des Anspruches 1 bzw 13.

Bekannt sind Längs- oder Querverstreckungen einer Folie sowie stufenweise hintereinander oder gleichzeitig ausgeführte Quer- und Längsverstreckungen.

Insbesondere bei der monoaxialen Längsverstreckung in Maschinenrichtung (MDO-Verstreckung) von Polypropylen umfassenden Filmen, nachfolgend auch teilweise als PP-Castfilm bezeichnet, ist es hinlänglich bekannt, ein sog. einstufiges Recken unter Nutzung eines Reckspaltes durchzuführen. Das gesamte Reckverhältnis wird in einem einzigen Spalt realisiert, wobei zwangsläufig eine hohe morphologische Schädigung des Kunststoffilmes eintritt.

Bei einem üblichen Reckverhältnis von 5 bei Polypropylen heißt dies im Falle eines einstufigen Reckschrittes, daß beispielsweise die Umfangsgeschwindigkeiten der den Reckspalt vor- bzw. nachgelagerten Walzen 50 m/min und 250 m/min beträgt. Bei einem Reckspalt in einer Größenordnung von 180 mm führt dies dann zu einer Dehnungsgeschwindigkeit von 3.700 %/sec. Bei derart hohen Dehnungsgeschwindigkeiten gelangen die mikromorphologischen Strukturelemente sehr rasch in den Bereich der kritischen Dehnung. Daraus muß zwar nicht in jedem Fall ein Abriß der gedehnten Kunststoffolie resultieren. Feststellbar sind aber auf jeden Fall Mikrorisse und Strukturfehler, die sich insbesondere bei einem Querreckvorgang (TDO-Recken) als Abrisse bemerkbar machen können.

Um die Anlagengeschwindigkeit grundsätzlich zu erhöhen und dabei gleichwohl die Festigkeit einer biaxial orientierten Polypropylen-Folie zu steigern, ist gemäß der DE 31 24 290 A1 bereits ein mehrstufiges Reckverfahren vorgeschlagen worden.

Bei einem zwei- oder mehrstufigen Recken läßt sich naturgegebenermaßen das am einzelnen Reckspalt auftretende Reckverhältnis und damit vor allem auch die Dehnungsgeschwindigkeit gegenüber einem einstufigen Reckvorgang minimieren.

Insbesondere die Unterteilung in zwei vergleichbare Reckschritte mit vergleichbaren Reckverhältnisses, d.h. also insbesondere etwa gleichgroßen Reckverhältnissen, würde dabei den Betrag der maximal auftretenden Dehngeschwindigkeit bei jedem Reckschritt gegenüber dem einstufigen Reckvorgang deutlich minimieren. Die vorstehend wiedergegebenen Grundsätze gelten dabei noch eher bei einem mehr als zwei Stufen umfassenden Reckvorgang.

Es hat sich aber nunmehr gezeigt, daß die bisher bekannt gewordenen Reckverfahren eine unzureichende Prozeßstabilität aufweisen.

Ein Verfahren zum Herstellen von biaxial gestreckten Flachfolien sowie eine zugehörige Vorrichtung hierfür ist auch aus der DE 36 21 205 A1 bekannt geworden. Dabei werden Vorfolien aus Polypropylen oder Polyester einer zwei-, drei- oder mehrstufigen Streckung unterzogen und zu biaxial gestreckten Flachfolien geformt. So erfolgt beispielsweise eine Längsreckung des Kunststoffolienfilms in einer ersten Längsstreckzone bei Temperaturen von 110°C bis 130°C und einem Streckverhältnis von 1,3 bis 2,0. In einem zweiten Längsreckschritt wird das Längsreckverhältnis beispielsweise zwischen 2,0 und 2,5 eingestellt, wobei der Kunststoffilm auf eine Temperatur von etwa 95°C bis 115°C aufgeheizt wird. Ein ähnliches Verfahren für Polyester-Filme ist aus der EP-A-0 049 108 bekannt geworden.

Durch eine derartige Anordnung lassen sich aber die o.g. Nachteile grundsätzlich nicht überwinden. Abrißhäufungen sowie Qualitätseinschränkungen sind weiterhin durch Querschnitts- oder auch Oberflächenungleichmäßigkeit nicht auszuschließen.

Schließlich ist aus der DE 26 07 657 A1 ein Verfahren zur molekularen biaxialen Orientierung von Polymerfilmen bekannt geworden, bei welchem zwischen zwei Reckvorgängen eine Zwischenbehandlung vorgenommen wird. Diese soll darin bestehen, daß sich der Film über einen gewissen Zeitraum bei einer Temperatur zwischen dessen Einfrierpunkt und etwa 30°C darüber befindet und einer Längsspannung unterworfen wird, die geringer als die während der Längsstrekkung des Films angelegte Längsspannung ist. Dadurch sollen innere Spannungen im Kunststofffilm entfernt und vermindert werden, um die Qualität des Kunststoffilms zu verbessern.

Aufgabe der vorliegenden Erfindung ist es, ein verbessertes Verfahren zur Herstellung von Kunststoff-Folien, insbesondere von Polypropylen umfassenden ein- oder mehrlagigen Folien sowie eine danach hergestellte Kunststoffolie und eine für den Herstellvorgang geeignete Vorrichtung zu schaffen.

Die Aufgabe wird bezüglich des Verfahrens entsprechend den im Anspruch 1 und im Hinblick auf die hierfür benötigte Vorrichtung bezüglich den im Anspruch 14 angegebenen Merkmalen gelöst. Vorteilhafte Ausgestaltungen der Erfindung sind in den Unteransprüchen angegeben.

Mit dem erfindungsgemäßen Verfahren ist es möglich, bei in Maschinenrichtung (also Längsrichtung) durchgeführten Reckvorgängen die Prozeßstabilität gegenüber herkömmlichen Verfahren deutlich zu erhöhen. Dies äußert sich in einer Senkung von Abrißhäufungen sowie in einer Minimierung von Qualitätseinschränkungen durch ansonsten bekannte Querschnitts- als auch Oberflächenungleichmäßigkeiten.

Vor allem läßt sich das erfindungsgemäße Verfahren auch bei modernen Anlagen anwenden, bei welchen die Produktionsgeschwindigkeiten 350 m/min und mehr betragen, beispielsweise sogar 400 m/min, 450 m/min oder sogar 500 m/min und mehr. Dies gilt also gleichermaßen auch für höhere Einlaufgeschwindigkeiten vor der ersten Reckzone, bei welchen der Kunststoff beispielsweise mit mehr als 50 m/min der ersten Reckzone zugeführt wird, beispielsweise gar mit 60 m/min oder 70 m/min oder mehr.

Erfindungsgemäß ist nunmehr vorgesehen, daß bei einem zumindest einstufigen Reckvorgang der längs-, quer- oder simultan oder nacheinander quer- und längsgereckte Film einer Nachbehandlung unterzogen wird, um die Gefügestruktur des Filmes zu verbessern. Dabei ist es Ziel der Erfindung, die Gefügestruktur des Filmes so positiv zu beeinflussen, daß eine möglichst hohe Orientierung erzielt wird, um dem Träger somit auch hohe mechanische Eigenschaften zu verleihen, ohne in solche Bereiche zu kommen, in denen durch zu hohe monoaxiale Zugbeanspruchung Strukturfehler innerhalb und zwischen den kristallinen Bezirken auftreten können. Denn gerade derartige Strukturfehler können bei längs- wie aber auch bei querverstreckten Filmen zu Abrissen führen oder als latente Strukturfehler beispielsweise an eine nach einer Längsreckeinrichtung nachgeordnete Querreckeinrichtung weitergereicht werden, um zumindest dort als Abrisse in Erscheinung zu treten.

Dabei ist vorgesehen, das Gleichgewicht
Desorientierung 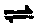 Orientierung
durch geeignete Maßnahmen so weit wie nötig (ohne in den Bereich des Spleißens zu gelangen) mit vertretbarem technischen Aufwand in Richtung zu einer Erhöhung des Orientierungsgrades (also nach rechts) zu verlagern.

Eine deutliche Verbesserung gegenüber herkömmlichen Verfahren läßt sich dadurch erzielen, daß die Anlage so ausgelegt ist, daß die Verweilzeit der Kunststoffolienbahn zwischen zwei Reckstufen (also nicht zwingend zwischen allen Reckstufen, aber zumindest bevorzugt zwischen den beiden Reckwalzen einer ersten Reckstufe) zumindest 1,5 sec beträgt. Vorteilhafte Werte sind beispielsweise 1,85 sec oder mehr. Dadurch wird der Folie genügend Zeit zum Relaxieren von teilweise überbeanspruchten Bereichen der Kunststoff-Matrix eingeräumt, wodurch verhindert wird, daß diese Bereiche in der nachfolgenden Reckstufe zu irreparablen Störstellen für den Reckvorgang führen.

Die Verweilzeiten von zumindest 1,5 sec sind gegenüber Anlagen nach dem Stand der Technik vergleichsweise groß, d.h. insbesondere bei Anlagen mit einer Umfangsgeschwindigkeit der der ersten Reckzone vorgelagerten Reckwalze von 50 m/min und mehr. Denn bei bisherigen Anlagen betrug die Verweilzeit deutlich weniger als 0,5 sec. Übliche Werte liegen bei 0,2 bis 0,3 sec.

Eine Verbesserung wird auch noch dadurch erzielt, daß eine Mindesttemperatur für die Kunststoffolienbahn zwischen zwei Reckstufen eingehalten wird. Bevorzugt soll die Temperatur dabei größer oder gleich einer um 5°C niedrigeren Temperatur als die Recktemperatur sein.

Im Falle einer Folie aus Polypropylen wird eine Mindesttemperatur von 120°C für die Temperatur während zweier Reckstufen vorgeschlagen.

Ferner hat sich gezeigt, daß höhere Temperaturen innerhalb des Polymers aufgrund der höheren Beweglichkeit der Gefügebausteine rasche Platzwechselvorgänge ermöglichen und dadurch höhere Relaxationsgeschwindigkeiten bewirken. Dies wirkt folglich beim Reckvorgang gezielt dem Erhalt eines Orientierungszustandes entgegen und verschiebt das o. g. Gleichgewicht stärker in Richtung "Desorientierung".

Tiefere Temperaturen erschweren demgegenüber aufgrund der geringen Molekül- und Segmentbeweglichkeit die ungestörte Ausbildung eines hinreichenden Ordnungszustandes. Dies führt letztlich zum Auftreten von Rissen und Abrissen.

Daraus resultiert, daß abgesehen von der Zeit - die der Folie zur Erzielung eines günstigen Gleichgewichtszustandes im Folienmaterial bereitgestellt wird - auch die Temperatur einen Einfluß hat, um ein Optimum bezüglich des angeführten Gleichgewichtes zu erzielen. Ein Optimum bezüglich des Gleichgewichtes hängt damit vor allem aber nicht von der Reckgeschwindigkeit ab.

Erfindungsgemäß werden also insbesondere bei einem mehrstufigen Reckprozeß und dabei wiederum bei einem vor allem in Längsrichtung (also in Folienabzugsrichtung) durchgeführten Reckprozeß durch Einhaltung von Mindest-Verweilzeiten für die Kunststoffolienbahn zwischen zwei Reckstufen und gegebenenfalls durch Einstellung bestimmter Temperaturen und/oder durch Einstellung bestimmter Reckverhältnisse die thermomechanischen Bedingungen derart gewählt, daß die resultierenden Relaxationsgeschwindigkeiten bei einer Verstreckung eines Polypropylen umfassenden Kunststoffilmes den notwendigen Platzwechselvorgängen von Bauelementen der Primärstrukturen angeglichen werden, um so Zerstörungen morphologischer Überstrukturen weitestgehend zu vermeiden.

Zum anderen können bei einem mehrstufigen Reckvorgang Temperaturen und Reckgeschwindigkeiten in den einzelnen Reckstufen degressiv abgestuft werden, um dennoch auftretende Über forderungen der Relaxationsgeschwindigkeiten durch thermomechanisch erzwungene Platzwechselvorgänge in der teilkristallinen nucleierten Polypropylen-Matrix durch thermodynamisch begründete Ausheilvorgänge in den gestörten Morphologien ablaufen zu lassen.

Mit der Erfindung wird es möglich, die Prozeßstabilität und Produktqualität bei modernen Anlagen mit einer Produktionsgeschwindigkeit bis zu 350 m/min zu steigern. Mit der Erfindung wird es zum anderen aber auch möglich, insbesondere bei sequentiell arbeitenden Hochgeschwindigkeitsanlagen (mit Produktionsgeschwindigkeiten größer als 350 m/min) überhaupt in den Bereich einer stabilen Prozeßführung, was die Abrißhäufigkeit betrifft, zu gelangen und außerdem technologisch/verfahrenstechnische Voraussetzungen als unabdingbaren Beitrag für eine ausreichende Qualität der Endfolie zu schaffen.

Die Erfindung wird nachfolgend anhand von Ausführungsbeispielen näher erläutert.

Es wird ausdrücklich festgestellt, daß zur Erfindung ebenfalls gehört, daß das erfindungsgemäße Verfahren und die erfindungsgemäße Vorrichtung auch bei einer Simultanreckanlage durchführbar bzw. einsetzbar ist,(also bei einer gleichzeitigen Längs- und Querreckung), grundsätzlich aber auch bei einer reinen Querreckung, wobei das in den Ansprüchen zum Ausdruck kommende Verfahren sowie die zum Ausdruck kommende Vorrichtung der wichtigste Anwendungsfall ist.

Dabei zeigen im einzelnen:
- Figur 1 :: ein Anlagenschema für eine dreistufige Längsreckanlage;
- Figur 2 :: eine schematische Wiedergabe des Walzenschemas gemäß Figur 1; und
- Figur 3a und 3b :: ein Temperaturdiagramm bezüglich eines optimierten Temperaturverlaufs bei einem dreistufigen Reckverlauf einer ersten und zweiten Kunststoffolie;
- Figur 4a bis 4d :: vier schematische Querschnitte quer zur Längsstreckung der Folie zur Erläuterung der Ausbildung einer Schulter beim Verstrecken;
- Figur 5 :: eine schematische vergrößerte auszugsweise Querschnittsdarstellung durch einen zu verstreckenden Polypropylen-Kunststoffilm unter Ausbildung einer Schulter;
- Figur 6a und 6b :: Schema einer idealen und einer realen Lamelle; und
- Figur 7a und 7b :: Schema einer sich bei der Verstrekkung aus einer idealen bzw. realen Lamelle ergebenden idealen bzw. realen Mikrofibrille.

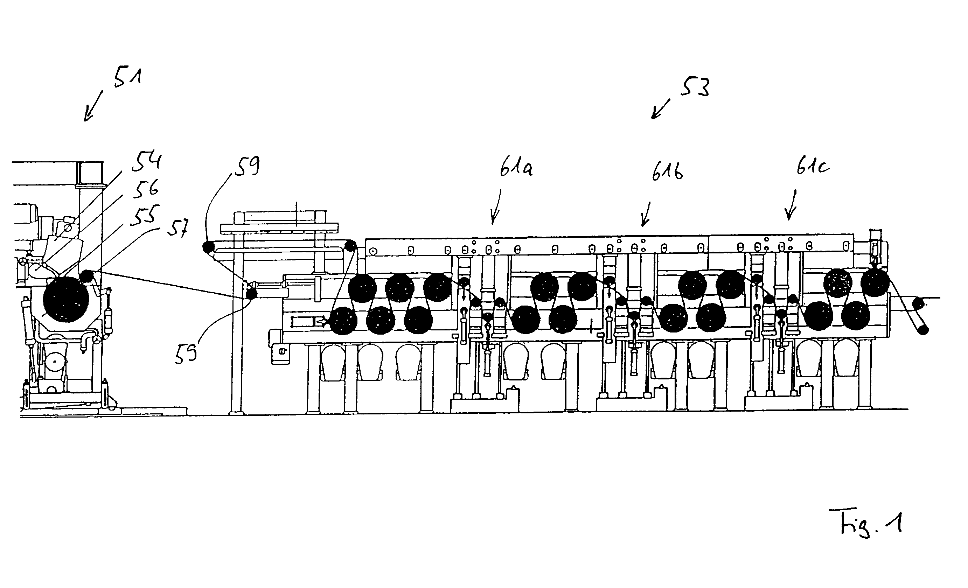

In Figur 1 ist in schematischer Seitendarstellung ein Anlagenschema mit einer Abzugseinrichtung 51 (casting unit) und einer Längsreckanlage 53 gezeigt.

Beispielsweise von einem Extruder kommend wird das Kunststoffolienmaterial über eine Düse 54, ein sog. Luftmesser 56 und nachfolgend über eine Abzugswalze 55 durch ein Wasserbad 57 hindurchgeführt und über mehrere Umlenkwalzen 59 der Längsreckanlage 53 zugeführt.

Nach dem Verlassen der Längsreckanlage 53 wird die Kunststoffolienbahn im gezeigten Ausführungsbeispiel gemäß Figur 1 dann beispielsweise einer Querreckanlage (TDO) zur Durchführung einer Querverstreckung zugeführt.

Die Längsreckanlage 53 umfaßt im gezeigten Ausführungsbeispiel drei Reckzonen 61a, 61b und 61c mit jeweils vier Walzen, deren Durchmesser deutlich geringer ist als der Walzendurchmesser der dazwischen befindlichen Walzen, um die der Kunststoffilm mit großem Umschlingungswinkel herum geführt ist.

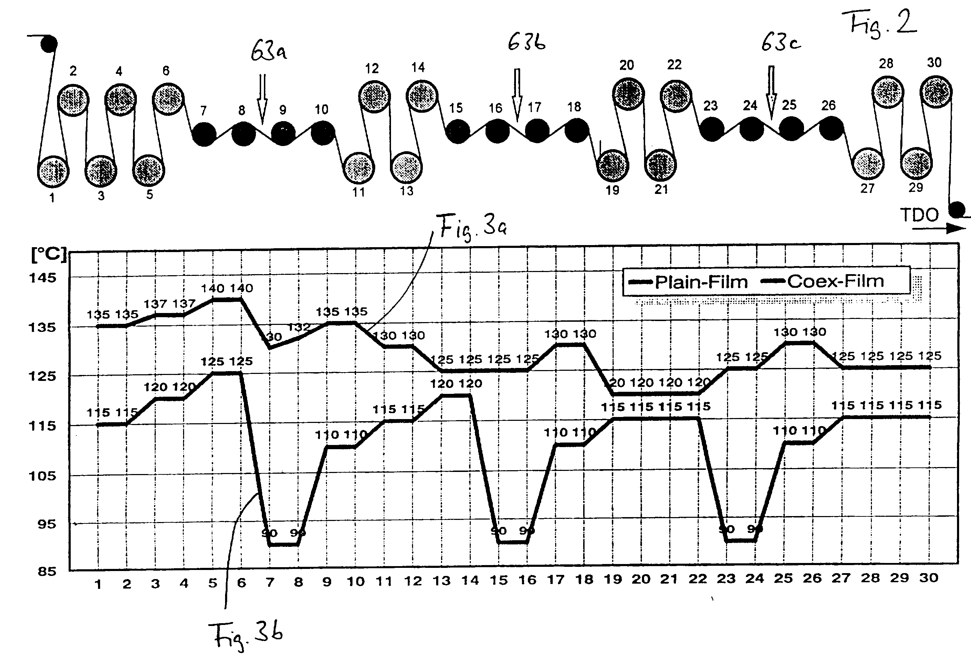

Die in Figur 1 in Seitenansicht wiedergegebenen Walzen sind in der schematischen Seitenansicht gemäß Figur 2 als Walzen 1 bis 30 durchnumeriert (auf der X-Achse des Diagramms).

Daraus ist ersichtlich, daß zwischen den Reckzonen jeweils mehrere Walzen so angeordnet sind, daß zwischen diesen die zu verstreckende Folie meanderförmig mit großem Umschlingungswinkel herumgeführt ist.

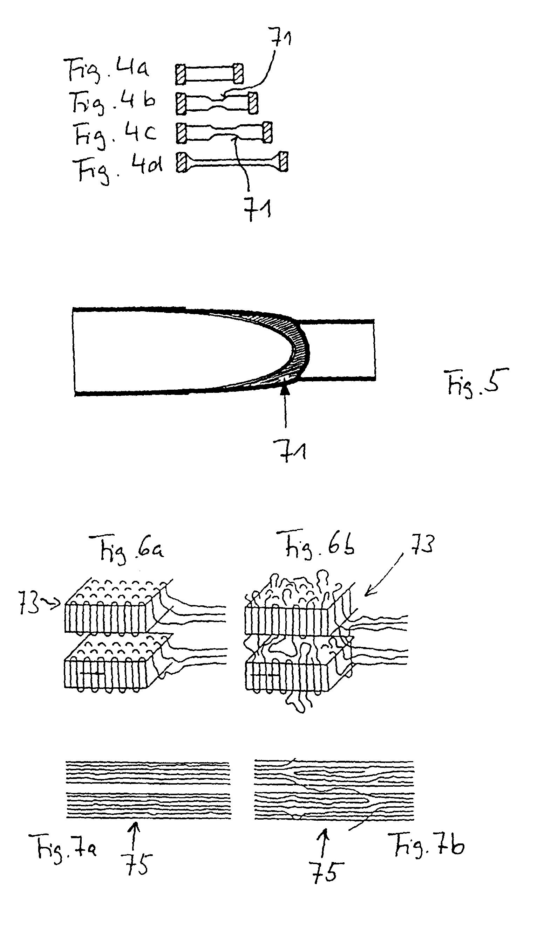

Den einzelnen Zonen bzw. den Walzen selbst können Aufheiz- und Abkühleinrichtungen zugeordnet sein, wodurch sich beispielsweise beim Verstrecken einer Einfach-Kunststoffolie aus Polypropylen der anhand von Figur 3a wiedergebene Temperaturverlauf für die Folie einstellen läßt, wobei im Diagramm unten die jeweilige Walzen-Nummer wiedergegeben ist.

Daraus ist nunmehr ersichtlich, daß bei Herstellung einer Polypropylen-Folie gemäß Figur 3a der Film zunächst kontinuierlich bis zur Walze Nr. 6 auf 140° Durchschnittstemperatur erwärmt wird. Bei Erreichen der ersten Reckzone, d.h. der ersten Walze in der Reckzone mit der Nr. 7, wird die Folientemperatur auf 130° gesenkt. Der Reckspalt 63a befindet sich zwischen der Walze Nr. 8 und der Walze Nr. 9. Die Umfangsdrehgeschwindigkeiten der beiden Reckwalzen 8 und 9, das davon abhängige Reckverhältnis, die Breite des Reckspaltes und die Dehnungsgeschwindigkeit ε in %/sec, wie die entsprechenden Werte für die nachfolgend noch im einzelnen erläuterte zweite und dritte Reckstufe ergeben sich durch die folgende Tabelle A

**Tabelle A**

| Reckstufe | v₁ (m/min) | v₂ (m/min) | r (Reckverhältnis) | s (mm) | ε (%/sec) |
|---|---|---|---|---|---|
| 1 | 50 | 167,5 | 3,35 | 180 | 1.277,8 |
| 2 | 167,5 | 226,2 | 1,35 | 180 | 95,4 |
| 3 | 226,2 | 248,7 | 1,10 | 180 | 10,5 |

Zwischen der 8. und 9. Walze wird die Temperatur von 132° auf 135° erwärmt, so daß mit anderen Worten die Temperatur nach Durchführung des Reckvorganges gering höher liegt als vor oder während des Reckvorganges, wobei diese Temperatur für gewisse kurze Zeit auf diesem erhöhten Niveau von beispielsweise 135°C beibehalten wird. Anschließend wird die Folientemperatur wieder auf 125° abgesenkt.

Zwischen den Walzen Nr. 16 und 17 befindet sich der zweite Reckspalt 63b mit einer Spaltenbreite von 180 mm. Aus der vorstehend genannten Tabelle A, d.h. den Umfangsgeschwindigkeiten der Walzen mit der Nr. 16 und 17, ergibt sich eine Dehngeschwindigkeit von 95,4 %/sec. Das Reckverhältnis beträgt hier 1,35. Da sich auch hier die zweite Reckwalze auf erhöhter Temperatur, nämlich auf 130° gegenüber 125° für die erste Reckwalze mit der Nr. 16 befindet, wird hierdurch ebenfalls unmittelbar nach Durchführung des zweiten Reckschrittes die Kunststoffolien-Temperatur leicht erhöht und für gewisse Zeit, nämlich bis zum Erreichen der nächsten Walze auf diesem Temperaturniveau belassen.

In der dritten Reckzone bilden die Walzen mit der Nr. 24 und 25 den Reckspalt 63c. Gemäß der vorstehend genannten Tabelle ist hier ein Reckverhältnis von 1,10 eingestellt, welches sich aus den Umfangs-Rotationsgeschwindigkeiten der beiden Reckwalzen mit der Nr. 24 und 25 ergibt. Auch hier wird wieder die Kunststoffolientemperatur um 5° von 125° auf 130° unmittelbar nach Durchführung dieses dritten Reckschrittes erhöht und bis zur nächsten Walze auf diesem Temperaturniveau belassen, um dann wiederum abgesenkt zu werden.

Durch den erläuterten mehrstufigen Reckprozeß wird auch bei niedrigeren Recktemperaturen als bei einem herkömmlichen Einstufenprozeß der Aufbau einer hohen und im wesentlichen fehlerfreien Orientierung möglich, da für die erforderlichen Platzwechselvorgänge die notwendige Zeit bei ausreichendem Temperaturniveau zur Verfügung gestellt wird. Die Relaxationsgeschwindigkeit wird von der Reckgeschwindigkeit im wesentlichen nicht mehr überfordert.

Da sich auch bei relativ niedrigen Dehngeschwindigkeiten stets noch Strukturfehler in der Mikromorphologie ausbilden, können diese Strukturfehler durch gezieltes Tempern nach dem jeweiligen Reckspalten weitestgehend ausgeheilt werden, wobei das nach unten abgestufte Reckverhältnis bei einem mehrstufigen Reckverfahren (im gezeigten Ausführungsbeispiel von 3,35 über 1,35 zu 1,10) dafür sorgt, daß die Größe und die Häufigkeit der möglichen Strukturfehler zunehmend weiter abklingen.

Durch das erfindungsgemäße Verfahren läßt sich also ein Folien-Material mit gegenüber herkömmlichen Methoden wesentlich größerer Homogenität und größer Spannungsfreiheit erzielen. Dieser Effekt manifestiert sich in weiter verbesserten mechanischen Eigenschaften sowie in verringerten schichtigen Schwankungen und einer besseren Oberflächengüte des Kunststoffolienfilms.

Anhand des Diagrammes gemäß Figur 3b ist ein entsprechend geeigneter Temperaturverlauf für die Herstellung eines Mehrlagen-Kunststoffilms gezeigt, der Polypropylen umfaßt, d.h. also insbesondere Schichten aus Polypropylen aufweist und zudem beispielsweise außenliegende Heißsiegelschichten umfaßt. Dieser Mehrlagenkunststoffilm wird jeweils unmittelbar vor Erreichen der Reckspalten deutlich stärker abgekühlt (im gezeigten Ausführungsbeispiel auf 90°C). Beim Übergang von der jeweils ersten zur zweiten Reckwalze oder aber ab Erreichen der zweiten Reckwalze 9, 17 bzw. 25 oder aber auch kurz danach wird die Kunststoffolie von 90°C auf 110°C erwärmt, für eine gewisse Zeit auf diesem Niveau gehalten, um dann in einem oder zwei weiteren Schritten nochmals jeweils geringfügig weiter erwärmt zu werden. Durch diesen dem unmittelbaren Dehnungsvorgang im Reckspalt nachfolgenden Temper-Schritt werden die oben erwähnten Vorteile realisiert.

Grundsätzlich könnte daran gedacht werden, abweichend von der oben genannten Reck-Tabelle das Reckverhältnis bei einem dreistufigen Reckprozeß so einzustellen, daß beispielsweise das Reckverhältnis die nachfolgend wiedergegebenen Daten erfüllt:

**Tabelle B**

| Reckstufe | v₁ (m/min) | v₂ (m/min) | r (Reckverhältnis) | s (mm) | ε (%/sec) |
|---|---|---|---|---|---|
| 1 | 50 | 130 | 2,6 | 180 | 592,6 |
| 2 | 130 | 208 | 1,6 | 180 | 216,0 |
| 3 | 208 | 250 | 1,2 | 180 | 38,5 |

Dies ist aber in der Praxis sinnvoll nicht durchführbar, und zwar aufgrund der unter Zugspannung ablaufenden Prozesse der Reck-Kinetik von teilkristallinem Polypropylen.

Dies wird anhand von Figur 4a bis 4d und Figur 5 näher erläutert.

Verfolgt man den Reckverlauf eines bisher mechanisch nicht beanspruchten Folienstreifens aus homopolymerem Polypropylen bei Zimmertemperatur, so ist die Ausbildung einer Schulter 71 bekannt, die an einer oder mehreren Stellen im Kunststoffolienstreifen plötzlich auftritt. Bei weiterer Dehnung wandert die Schulter über die ganze Länge der Folienprobe hinweg, so daß diese sukzessive auf Endquerschnitt verstreckt wird.

Anhand der Figuren 4a bis 4d ist in vier schematischen Querschnittsdarstellungen die Foliendicke vor dem Recken (Figur 4a), nach dem Einsetzen der Schulterausbildung, während des Verstreckvorganges (Figur 4b) und während des weiteren Verstreckens bis hin zu dem Zustand gemäß Figur 4d nach dem Recken dargestellt.

Das Ausbilden einer solchen Schulter 71 oder begrenzten Fließzonen ist jedoch kein charakteristisches Merkmal der Verstreckung von Polymeren, da sich bei genügend langsamer Verstreckung bzw. genügend amorphem Material oder auch bei ausreichender Erwärmung die Schulter zum Verschwinden gebracht werden kann, also jeder dazwischenliegende Verstreckungsgrad möglich ist.

Die wichtigste morphologische Veränderung bei einer 1:5-Längs-Verstreckung eines Polypropylen-Castfilmes ist der morphologische Übergang von der Lamellen- zur Fibrillenstruktur.

Um die Deformationsmechanismen beim Übergang von der Lamellen- zur Fibrillenstruktur besser zu verstehen, wird angemerkt, daß entlang der in Figur 4a bis 4d sowie der Figur 5 dargestellten Schulterzone 71 von der Probenkante unter einem bestimmten Winkel sog. Scherenbänder in die Folie hineinverlaufen. Das Scherspannungsfeld verdichtet sich mit zunehmender Einschnürung, bis ein Endbereich der Verstreckung mit Fibrillenstruktur erreicht ist, wie dies anhand von Figur 6a für eine ideale und anhand von Figur 6b für eine reale Lamelle 73 und der sich bei der Verstreckung daraus ergebenden idealen Mikrofibrille 75 gemäß Figur 7a und einer realen Mikrofibrille 75 gemäß Figur 7b gezeigt ist.

Starke Vergrößerungen lassen erkennen, daß die einzelnen Bänder aus kleinen, senkrecht zur Zugspannung ausgerichteten Deformationszonen bestehen, die sich bevorzugt in den Grenzbereichen der Sphärolithe gebildet haben und in Richtung der Scherspannung aufgereiht sind (Figur 6a bis Figur 7b). Aufgrund dieser strukturellen Umbauprozesse in der Folie während des Reckvorganges ist erklärbar, warum das Reckverhältnis in der allerersten Reckstufe bei unnukleiertem Polypropylen auch unter rauhen Betriebsbedingungen bis ca. r = 5 angesiedelt ist.

Da man also den ersten Reckschritt, d.h. den ersten Primärschritt, der Strukturumwandlung unter Ausbildung der Schulter nicht über mehrere Reckspalten verteilen kann, liegt das Reckverhältnis in der ersten Reckstufe mit deutlichem Abstand am höchsten.
Allerdings kann in der Praxis versucht werden, die Lamellendicke im Bereich der Abzugswalze durch Einsatz wirksamer Nukleierungsmittel und niedriger Wasserbandtemperaturen zu verkleinern, da unter diesen Bedingungen selbst kleine Sphärolithe mit folglich ebenso geringer Lamellendicke erzielbar sind. Durch diese Verringerung der Lamellendicke ist es dann möglich, das entsprechende Reckverhältnis bis auf ca. 1:3 (anstelle von 1:5) herabzusetzen. Als günstiges Reckverhältnis ergibt sich dann beispielsweise der Wert von r = 3,35 in der ersten Stufe, wie dies anhand von Tabelle A verdeutlich ist.

## Patentansprüche

1. Zumindest zweistufiges Verfahren zur Längsreckung von nicht aus Polyester bestehenden Kunststoffolien, insbesondere umfassend Polypropylen, wobei die Kunststoffolie während des jeweiligen Reckschrittes auf einen geeigneten Reck-Temperaturbereich erwärmt ist, **gekennzeichnet durch** die folgenden Merkmale
- die Kunststoffolie wird in der ersten Reckzone mit einem Reckverhältnis (r) größer als 3 und kleiner als 5 gereckt,
- die Umfangsgeschwindigkeit der der ersten Reckzone vorgelagerten Reckwalze beträgt dabei zumindest 50 m/min, und/oder die Produktionsgeschwindigkeit 350 m/min und mehr, und
- die Verweilzeit für die Kunststoffolienbahn zwischen dem ersten und dem zweiten Reckschritt beträgt zumindest 1,5 sec.

2. Verfahren nach Anspruche 1, **dadurch gekennzeichnet**, daß bereits während der Durchführung des Reckvorganges begonnen wird die Kunststoffolienbahn über eine beim Reckvorgang gegebene Reck- oder Durchschnittstemperatur hinaus auf eine Prozeßtemperatur zu erwärmen.

3. Verfahren nach Anspruch 1, **dadurch gekennzeichnet**, daß die Erwärmung der Kunststoffolie auf eine Prozeßtemperatur jeweils unmittelbar nach Durchführung eines Reckvorganges durchgeführt wird.

4. Verfahren nach Anspruch 1 oder 2, **dadurch gekennzeichnet**, daß die das erhöhte Temperaturprofil ergebende Prozeßtemperatur der Kunststoffolienbahn nur für eine bestimmte Zeitdauer (t) zwischen zwei Reckschrittten erreicht oder beibehalten wird.

5. Verfahren nach einem der Ansprüche 1 bis 4, **dadurch gekennzeichnet,** daß die Temperatur der Kunststoffolienbahn zwischen zwei Reckschritten auf einer Mindesttemperatur gehalten wird, die bei einer aus Polypropylen bestehenden oder umfassenden Kunststoffolienbahn 120°C und bei einer aus Polyester bestehenden oder umfassenden Kunststoffolienbahn 80°C entspricht.

6. Verfahren nach einem der Ansprüche 1 bis 5, **dadurch gekennzeichnet**, daß die Verweilzeit für die Kunststoffolienbahn zwischen zwei dem ersten Reckschritt nachfolgenden Reckschritten zumindest 1,5 sec. beträgt.

7. Verfahren nach einem der Ansprüche 1 bis 6, **dadurch gekennzeichnet**, daß insbesondere bei Herstellung eines mehrlagigen Kunststoffilms der Kunststoffilm vor Durchführung eines Reckschrittes abgekühlt und während und/oder nach, d.h. vorzugsweise unmittelbar nach dem Reckschritt auf eine demgegenüber höhere Temperatur erwärmt wird.

8. Verfahren nach einem der Ansprüche 1 bis 7, **dadurch gekennzeichnet**, daß bei einem ersten Reckschritt eines mehrstufigen Reckverfahrens ein Reckverhältnis (r) gewählt wird, das zwischen 3 und 4 liegt.

9. Verfahren nach einem der Ansprüche 1 bis 8, **dadurch gekennzeichnet**, daß bei einem zumindest zweistufigen Reckvorgang das Reckverhältnis bei der zweiten Reckstufe so gewählt wird, daß dieses ≥1 und ≤ 2 ist, vorzugsweise zwischen 1,1 und 1,5 liegt.

10. Verfahren nach einem der Ansprüche 1 bis 9, **dadurch gekennzeichnet**, daß bei einem insbesondere dreistufigen Reckverfahren das Reckverhältnis beim dritten Reckschritt größer als 1 und kleiner als 1,3 ist, vorzugsweise zwischen 1,05 und 1,20 liegt.

11. Verfahren nach einem der Ansprüche 1 bis 10, **dadurch gekennzeichnet**, daß bei einem mehrstufigen Reckvorgang die Größe der Reckverhältnisse aufeinanderfolgend degressiv abnimmt.

12. Verfahren nach einem der Ansprüche 1 bis 11, **dadurch gekennzeichnet**, daß bei einem mehrstufigen Reckverfahren die Prozeßtemperatur zumindest bei einem nachfolgenden Reckschritt gegenüber einem vorher stattgefundenen Reckschritt auf ein niedriges Temperaturprofil eingestellt ist.

13. Vorrichtung zur Durchführung des Verfahrens nach einem der Ansprüche 1 bis 12, mit zumindest zwei Reckzonen (61a, 61b, 61c) mit zumindest zwei Reckspalten (63a, 63b, 63c), **gekennzeichnet durch** die folgenden Merkmale
- die erste Reckzone (61a) ist so einstellbar, daß die Kunststoffolie mit einem Reckverhältnis (r) größer als 3 und kleiner als 5 in Längsrichtung gereckt wird,
- die Umfangsgeschwindigkeit der der ersten Reckzone (61a) vorgelagerten Reckwalze ist dabei auf vorzugsweise zumindest 50 m/min und/oder die Produktionsgeschwindigkeit der Anlage insgesamt auf 350 m/min und mehr einstellbar, und
- die Verweilzeit der Kunststoffolie zwischen der ersten und zweiten Reckzone (61a, 61b) beträgt zumindest 1,5 sec.

14. Vorrichtung nach Anspruch 13, **gekennzeichnet durch** eine Aufwärmeinrichtung am oder hinter dem jeweiligen Reckspalt (63a, 63b, 63c) und/oder in der dem Reckspalt jeweils nachgeordneten Reckwalze (9, 17, 25) zur Einstellung einer gegenüber der Recktemperatur erhöhten Prozeßtemperatur.

15. Vorrichtung nach Anspruch 13 oder 14, **dadurch gekennzeichnet**, daß die Aufwärmeinrichtung so ausgebildet ist, daß eine Erwärmung des Kunststoffilms auf die gegenüber der Recktemperatur erhöhte Prozeßtemperatur nur für eine bestimmte Zeitdauer (t) für die durch die Vorrichtung hindurch bewegte Kunststoffolienbahn bewirkbar ist.

16. Vorrichtung nach einem der Ansprüche 13 bis 15, **dadurch gekennzeichnet**, daß die zumindest eine einem nachfolgenden Reckspalt (63a, 63b, 63c) zugeordnete Aufwärmeinrichtung so ausgelegt ist, daß darüber eine gegenüber der Prozeßtemperatur nach dem ersten oder vorhergehenden Reckschritt niedrigere Prozeßtemperatur einstellbar ist.

17. Vorrichtung nach einem der Ansprüche 13 bis 16, **dadurch gekennzeichnet**, daß die mehreren Reckzonen (61a, 61b, 61c) so ausgelegt sind, daß die Größe des Reckverhältnisses von einer Reckzone (61a, 61b, 61c) zur nächsten abnimmt.

18. Vorrichtung nach zumindest einem der Ansprüche 13 bis 17, **dadurch gekennzeichnet**, daß die Reckwalzen (8, 9) am ersten Reckspalt (63a) so eingestellt sind, daß ein Reckverhältnis zwischen 3 und 4 erzielbar ist.

19. Vorrichtung nach einem der Ansprüche 13 bis 18, **dadurch gekennzeichnet**, daß die Reckwalzen (16, 17) am zweiten Reckspalt (63b) so eingestellt sind, daß ein Reckverhältnis ≥ 1 und ≤ 2, vorzugsweise ≥ 1,1 und ≤ 1,5 erzielbar ist.

20. Vorrichtung nach einem der Ansprüche 13 bis 19, **dadurch gekennzeichnet**, daß bei einer dreistufigen Reckanlage die den dritten Reckspalt (63c) bildenden Reckwalzen (24, 25) so eingestellt sind, daß ein Reckverhältnis ≥ 1 und ≤ 1,3, vorzugsweise ≥ 1,05 und ≤ 1,20 erzielbar ist.

21. Vorrichtung nach einem der Ansprüche 13 bis 20, **dadurch gekennzeichnet**, daß zwischen den Reckspalten (63a, 63b, 63c) zumindest zwei, vorzugsweise zumindest drei oder zumindest vier Walzen mit einem Umschlingungswinkel von mehr als 120°, vorzugsweise mehr als 180° zur Erzielung einer ausreichenden Mindestzeit (tₘᵢₙ) vorgesehen sind, wodurch der zeitliche Mindestabstand zweier aufeinanderfolgender Reckschritte einstellbar ist.

22. Vorrichtung nach einem der Ansprüche 13 bis 21, **dadurch gekennzeichnet**, daß Aufwärmeinrichtungen vorgesehen sind, wobei die Kunststoffolienbahn zwischen den beiden Reckstufen auf einer Mindesttemperatur von 120°C bei einem aus Polypropylen bestehenden oder Polypropylen umfassenden Kunststoffolienbahn und auf einer Mindesttemperatur von 80°C bei einer aus Polyester bestehenden oder Polyester umfassenden Kunststoffolienbahn gehalten wird.

## Claims

1. Process with at least two stages for the lengthwise stretching of plastic film not consisting of polyester, in particular comprising polypropylene, the plastic film being heated to a suitable stretching temperature range during the respective stretching step, characterized by the following features
- the plastic film is stretched in the first stretching zone with a stretching ratio (r) higher than 3 and lower than 5,
- the circumferential speed of the stretching roller preceding the first stretching zone is, in this case, at least 50 m/min, and/or the production speed is 350 m/min and above, and
- the dwell time for the plastic film web between the first and the second stretching step is at least 1.5 sec.

2. Process according to claim 1, characterized in that, even while the stretching operation is being carried out, the plastic film web begins to be heated above a stretching or average temperature, prevailing during the stretching operation, to a process temperature.

3. Process according to claim 1, characterized in that the heating of the plastic film to a process temperature is carried out in each case immediately after a stretching operation has been carried out.

4. Process according to claim 1 or 2, characterized in that the process temperature of the plastic film web, the said process temperature resulting in the increased temperature profile, is reached or maintained only for a specific period of time (t) between two stretching steps.

5. Process according to one of claims 1 to 4, characterized in that the temperature of the plastic film web between two stretching steps is maintained at a minimum temperature which corresponds to 120°C, in the case of a plastic film web consisting of or comprising polypropylene, and to 80°C, in the case of a plastic film web consisting of or comprising polyester.

6. Process according to one of claims 1 to 5, characterized in that the dwell time for the plastic film web between two stretching steps following the first stretching step is at least 1.5 sec.

7. Process according to one of claims 1 to 6, characterized in that, in particular during the manufacture of a multiply plastic film, the plastic film is cooled before a stretching step is carried out and is heated to a relatively higher temperature during and/or after, that is to say preferably immediately after the stretching step.

8. Process according to one of claims 1 to 7, characterized in that, during a first stretching step of a multistage stretching process, a stretching ratio (r) which is between 3 and 4 is selected.

9. Process according to one of claims 1 to 8, characterized in that, in the case of a stretching operation with at least two stages, the stretching ratio in the second stretching stage is selected in such a way that it is ≥ 1 and ≤ 2, preferably between 1.1 and 1.5.

10. Process according to one of claims 1 to 9, characterized in that, in the case of a stretching process with, in particular, three stages, the stretching ratio in the third stretching step is higher than 1 and lower than 1.3, preferably between 1.05 and 1.20.

11. Process according to one of claims 1 to 10, characterized in that, in the case of a multistage stretching operation, the size of the stretching ratios successively decreases degressively.

12. Process according to one of claims 1 to 11, characterized in that, in the case of a multistage stretching process, the process temperature is set, at least in a subsequent stretching step, at a low temperature profile, as compared with a stretching step which has previously taken place.

13. Equipment for carrying out the process according to one of claims 1 to 12, with at least two stretching zones (61a, 61b, 61c) having at least two stretching gaps (63a, 63b, 63c), characterized by the following features
- the first stretching zone (61a) can be set in such a way that the plastic film is stretched in the longitudinal direction with a stretching ratio (r) higher than 3 and lower than 5,
- the circumferential speed of the stretching roller preceding the first stretching zone (61a) can, in this case, be set at at least 50 m/min, and/or the production speed of the plant as a whole at 350 m/min and above, and
- the dwell time of the plastic film between the first and second stretching zone (61a, 61b) is at least 1.5 sec.

14. Equipment according to claim 13, characterized by a heating device at or downstream of the respective stretching gap (63a, 63b, 63c) and/or in the stretching roller (9, 17, 25) in each case following the stretching gap, for setting a process temperature which is increased, as compared with the stretching temperature.

15. Equipment according to claim 13 or 14, characterized in that the heating device is designed in such a way that the plastic film can be heated to the process temperature which is increased, as compared with the stretching temperature, only for a specific period of time (t) for the plastic film web moved through the equipment.

16. Equipment according to one of claims 13 to 15, characterized in that the at least one heating device assigned to a following stretching gap (63a, 63b, 63c) is designed in such a way that a process temperature lower than the process temperature downstream of the first or preceding stretching step can be set via the said heating device.

17. Equipment according to one of claims 13 to 16, characterized in that the plurality of stretching zones (61a, 61b, 61c) is designed in such a way that the size of the stretching ratio decreases from one stretching zone (61a, 61b, 61c) to the next.

18. Equipment according to at least one of claims 13 to 17, characterized in that the stretching rollers (8, 9) of the first stretching gap (63a) are set in such a way that a stretching ratio of between 3 and 4 can be achieved.

19. Equipment according to one of claims 13 to 18, characterized in that the stretching rollers (16, 17) of the second stretching gap (63b) are set in such a way that a stretching ratio of > 1 and < 2, preferably ≥ 1.1 and ≤ 1.5, can be achieved.

20. Equipment according to one of claims 13 to 19, characterized in that, in the case of a three-stage stretching plant, the stretching rollers (24, 25) forming the third stretching gap (63c) are set in such a way that a stretching ratio of ≥ 1 and ≤ 1.3, preferably ≥ 1.05 and ≤ 1.20, can be achieved.

21. Equipment according to one of claims 13 to 16, characterized in that at least two, preferably at least three or at least four rollers with a looping angle of more than 120°, preferably more than 180°, for achieving a sufficient minimum time (tₘᵢₙ) are provided between the stretching gaps (63a, 63b, 63c), with the result that the minimum time interval between two successive stretching steps can be set.

22. Equipment according to one of claims 13 to 21, characterized in that heating devices are provided, the plastic film web being maintained, between the two stretching stages, at a minimum temperature of 120°C, in the case of a plastic film web consisting of polypropylene or comprising polypropylene, and at a minimum temperature of 80°C, in the case of a plastic film web consisting of polyester or comprising polyester.

## Revendications

1. Procédé à deux étapes au moins pour l'étirage longitudinal de feuilles en matière plastique qui ne sont pas réalisées en polyester, comprenant en particulier du polypropylène, dans lequel la feuille de matière plastique est réchauffée pendant l'étape d'étirage respective jusqu'à une plage de température d'étirage convenable, caractérisé par les éléments suivants :
- la feuille en matière plastique est étirée dans la première zone d'étirage avec un rapport d'étirage (r) supérieur à 3 et inférieur à 5,
- la vitesse périphérique du cylindre d'étirage disposé en amont de la première zone d'étirage s'élève à au moins 50 m/min, et/ou la vitesse de production s'élève à 350 m/min et plus, et
- le temps de séjour pour la bande de feuille en matière plastique entre la première et la deuxième étape d'étirage s'élève à au moins 1,5 s.

2. Procédé selon la revendication 1, caractérisé en ce que l'on commence déjà pendant l'exécution de l'étape d'étirage à réchauffer la bande de feuille en matière plastique au-delà d'une température d'étirage donnée lors de l'étape d'étirage, ou d'une température moyenne, jusqu'à une température de traitement.

3. Procédé selon la revendication 1, caractérisé en ce que le réchauffement de la feuille en matière plastique jusqu'à une température de traitement est exécuté respectivement immédiatement après exécution d'une étape d'étirage.

4. Procédé selon l'une ou l'autre des revendications 1 et 2, caractérisé en ce que la température de traitement de la bande de feuille en matière plastique qui engendre le profil de température accru est atteinte ou maintenue uniquement pendant une durée déterminée (t) entre deux étapes d'étirage.

5. Procédé selon l'une des revendications 1 à 4, caractérisé en ce que la température de la bande de feuille en matière plastique entre deux étapes d'étirage est maintenue à une température minimum qui correspond à 120°C pour une bande de feuille constituée de ou comprenant du polypropylène, et à 80°C pour une bande de feuille constituée de ou comprenant du polyester.

6. Procédé selon l'une des revendications 1 à 5, caractérisé en ce que le temps de séjour pour la bande de feuille en matière plastique entre deux étapes d'étirage qui suivent la première étape d'étirage s'élève à au moins 1,5 s.

7. Procédé selon l'une des revendications 1 à 6, caractérisé en ce que, en particulier lors de la fabrication d'un film de matière plastique à plusieurs couches, le film en matière plastique est refroidi avant l'exécution d'une étape d'étirage et réchauffé à une température plus élevée pendant et/ou après, c'est-à-dire de préférence immédiatement après l'étape d'étirage.

8. Procédé selon l'une des revendications 1 à 7, caractérisé en ce que lors d'une première étape d'étirage d'un procédé d'étirage à plusieurs étapes, on choisit un rapport d'étirage (r) compris entre 3 et 4.

9. Procédé selon l'une des revendications 1 à 8, caractérisé en ce que dans un processus d'étirage en deux étapes au moins le rapport d'étirage dans la deuxième étape d'étirage est ainsi choisi que celui-ci est ≥ 1 et ≤ 2, et de préférence compris entre 1,1 et 1,5.

10. Procédé selon l'une des revendications 1 à 9, caractérisé en ce que dans un processus d'étirage comprenant particulier trois étapes, le rapport d'étirage de la troisième étape d'étirage est supérieur à 1 et inférieur à 1,3, et de préférence compris entre 1,05 et 1,20.

11. Procédé selon l'une des revendications 1 à 10, caractérisé en ce que dans un processus d'étirage à plusieurs étapes, les valeurs des rapports d'étirage diminuent de façon dégressive les unes après les autres.

12. Procédé selon l'une des revendications 1 à 11, caractérisé en ce que dans un processus d'étirage à plusieurs étapes, la température de traitement est réglée, au moins lors d'une étape d'étirage successive, à un profil de température inférieur par rapport une étape d'étirage ayant déjà eu lieu.

13. Appareil pour la mise en oeuvre du procédé selon l'une des revendications 1 à 12, comprenant au moins deux zones d'étirage (61a, 61b, 61c) comprenant au moins deux fentes d'étirage (63a, 63b, 63c), caractérisé par les éléments suivants :
- la première zone d'étirage (61a) peut être ainsi réglée que la feuille de matière plastique est étirée avec un rapport d'étirage (r) supérieur à 3 et inférieur à 5 en direction longitudinale,
- la vitesse périphérique du cylindre d'étirage disposé en amont de la première zone d'étirage (6 la) est ici réglable à au moins 50 m/min et/ou la vitesse de production de l'installation est réglable au total à 350 m/min et plus, et
- le temps de séjour de la feuille en matière plastique entre la première et la deuxième zone d'étirage (61a, 61b) s'élève à au moins 1,5 s.

14. Appareil selon la revendication 13, caractérisé par un dispositif de chauffage au niveau de ou derrière la fente d'étirage respective (63a, 63b, 63c) et/ou dans le cylindre d'étirage (9, 17, 25) agencé respectivement après la fente d'étirage, afin de régler une température de traitement supérieure à la température d'étirage.

15. Appareil selon l'une ou l'autre des revendications 13 et 14, caractérisé en ce que le dispositif de chauffage est ainsi réalisé que l'on peut produire un réchauffement du film en matière plastique à la température de traitement accrue vis-à-vis de la température d'étirage uniquement pendant une durée déterminée (t) pour la bande de feuille de matière plastique déplacée à travers l'appareil.

16. Appareil selon l'une des revendications 13 à 15, caractérisé en ce que le dispositif de chauffage associé à au moins une fente d'étirage successive (63a, 63b, 63c) est ainsi conçu qu'il est possible de régler au moyen de celui-ci une température de traitement inférieure à la température de traitement après la première étape ou après l'étape précédente.

17. Appareil selon l'une des revendications 13 à 16, caractérisé en ce que les plusieurs zones d'étirage (61a, 61b, 61c) sont ainsi conçues que la valeur du rapport d'étirage diminue depuis une zone d'étirage (61a, 61b, 61c) à la suivante.

18. Appareil selon l'une au moins des revendications 13 à 17, caractérisé en ce que les cylindres d'étirage (8, 9) au niveau de la première fente d'étirage (63a) sont ainsi réglés que l'on peut obtenir un rapport d'étirage compris entre 3 et 4.

19. Appareil selon l'une des revendications 13 à 18, caractérisé en ce que les cylindres d'étirage (16, 17) au niveau de la deuxième fente d'étirage (63b) sont ainsi réglés que l'on peut obtenir un rapport d'étirage ≥ 1 et ≤ 2, de préférence ≥ 1,1 et ≤ 1,5.

20. Appareil selon l'une des revendications 13 à 19, caractérisé en ce que dans une installation d'étirage à trois étapes, les cylindres d'étirage (24, 25) qui forment la troisième fente d'étirage (63c) sont ainsi réglés que l'on peut obtenir un rapport d'étirage ≥ 1 et ≤ 1,3, de préférence ≥ 1,05 et ≤ 1,20.

21. Appareil selon l'une des revendications 13 à 20, caractérisé en ce qu'il est prévu entre les fentes d'étirage (63a, 63b, 63 c) au moins deux et de préférence au moins trois ou au moins quatre cylindres avec un angle d'enroulement supérieur à 120°, de préférence supérieur à 180° pour atteindre un temps minimum suffisant (tₘᵢₙ), grâce à quoi la distance minimum temporelle entre deux étapes d'étirage successives est réglable.

22. Appareil selon l'une des revendications 13 à 21, caractérisé en ce que des dispositifs de chauffage sont prévus, de sorte que la bande de feuille en matière plastique est maintenue à une température de température minimum de 120°C dans le cas d'une bande de feuille en matière plastique constituée de ou comprenant du polypropylène, et à une température minimum de 80°C dans le cas d'une bande de feuille en matière plastique constituée de ou comprenant du polyester.
